Europäisches Patentamt

European Patent Office

Office européen des brevets

(11) Publication number: **0 183 950**
**B1**

# EUROPEAN PATENT SPECIFICATION

(45) Date of publication of patent specification: **16.05.90**

(51) Int. Cl.⁵: **G 01 N 35/08, G 01 N 30/06**

(21) Application number: **85113154.0**

(22) Date of filing: **17.10.85**

(54) Method of processing liquid within a tube.

(30) Priority: **18.10.84 US 662128**

(43) Date of publication of application:
**11.06.86 Bulletin 86/24**

(45) Publication of the grant of the patent:
**16.05.90 Bulletin 90/20**

(84) Designated Contracting States:
**DE FR GB IT NL**

(56) References cited:
WO-A-84/02000    US-A-2 797 149
DD-A- 101 014    US-A-2 933 293
GB-A-1 238 395

ANALYTICAL CHEMISTRY, vol. 53, no. 12,
October 1981, pages 1403A-1418A, Easton,
Pennsylvania, US; D.A. BURNS "Automated
sample preparation"

TRENDS IN ANALYTICAL CHEMISTRY, vol. 2,
no. 8, August 1983, pages 183-187, Cambridge,
GB; J.C. KRAAK: "Automated sample handling
by extraction techniques"
Hewlett-Packard Journal, April 1984, pages
21-24

(73) Proprietor: **Hewlett-Packard GmbH**
**Herrenberger Strasse 130 Postfach 14 30**
**D-7030 Böblingen (DE)**

(72) Inventor: **Jonker, Robert Jan**
**Slotlaan 4**
**NL-1394 BK Nederhorst den Berg (NL)**
Inventor: **Apffel, James Alexander**
**405 Opihikao Pl.**
**Honolulu Hawaii 96825 (US)**

(74) Representative: **Schulte, Knud; Dipl.-Ing.**
**c/o Hewlett-Packard GmbH Europ. Patent- und**
**Lizenzabteilung Postfach 1430 Herrenberger**
**Strasse 130**
**D-7030 Böblingen (DE)**

Courier Press, Leamington Spa, England.

## Description

The present invention relates to a method of processing liquid within a tube, that is, to the use of a sample injection system for additionally processing sample liquid prior to injection into the analytical instrument. Such methods are used in the chemical preparation of samples for analysis in various types of systems, such as chromatographs. The invention may in particular be applied as an automatic preparation method in which one or a small number of samples are pretreated prior to analysis.

In a typical chromatograph, a sample is injected into a solvent stream which is passed through a separation column (e.g., an adsorption, ion exchange or gel permeation column). As a result of chemical and physical interaction between the chemical components of the sample and the separation column, each component passes at a different rate through the separation column. After passage through the separation column, the solvent stream passes through a detector (e.g., a spectrophotometer) which detects each component as it passes through the detector.

Unfortunately, a test sample cannot usually be inserted, without processing, into the detector path because test samples typically contain components that degrade operation of the separation column and/or interfere with detection of the sample component of interest. Therefore, prior to inserting into the solvent stream through the detector, the test sample must go through a sample preparation stage that is often quite lengthy and expensive. These steps can include sample steps such as precipitation, filtration, centrifugation, changes in concentration, extraction, chemical derivatization, and/or separation by passage through a distillation column. Such sample preparation can also be very elaborate such as in analysis of complex organic molecules in which such molecules are chemically broken into constituent parts and these parts are converted into derivatives more suitable for passage through the separation column and the detector. Typically, these preparation steps are performed manually and are therefore time consuming and expensive. To reduce the cost and duration of this preparation stage, it is advantageous to automate this preparation stage.

In one system known as the Baker 10 Extraction System, liquid-solid extraction times are reduced by use of a vacuum system that allows up to 10 columns to be inserted in parallel into a vacuum system for liquid-solid extraction of up to 10 samples concurrently. Unfortunately, introduction of samples into each column and insertion of the columns into the vacuum system is performed manually so that the extraction step is still time consuming. Another automation technique uses robots to substantially duplicate the procedures now performed manually. Such an approach is flexible and has the advantage of utilizing fully developed chemical processing steps, but it is inordinately expensive.

Liquid-liquid extraction is far more popular than liquid-solid extraction for sample clean-up and pre-concentration because of its predictability, simplicity, reproducibility, selectivity and flexibility. A continous-flow analysis technique is introduced in the article L. J. Skeggs, Am. J. Clin. Pathol., 28, 311, (1957) and in an article by J.C. Kraak entitled "Automated Sample Handling by Extraction Techniques", and published in Trends in Analytical Chemistry, vol. 2, no. 8, 1983, a continuous-flow technique is described for liquid-liquid extraction. In the process presented by Kraak, a detector flow path is utilized that includes an inlet for the solvent carrier, an inlet for insertion of air bubbles, and an inlet for insertion of sample plugs. To prevent interference with the separation column and detector, a phase separator is included to remove the air and resulting waste phase before passage through the column and detector. In this technique, Bolus flow is utilized to exhance the liquid-liquid extraction process.

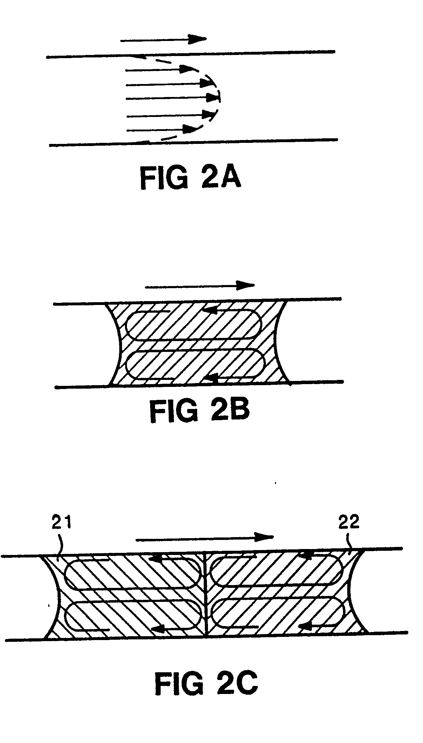

Bolus flow can be understood by reference to Figures 2A-2C. When a volume of sample fluid is drawn into or injected into a narrow tube, the sample fills the tube over a continuous region referred to herein as a plug. When a plug travels through a tube in a direction indicated by the arrow above each figure, a parabolic distribution of velocity results as shown in Figure 2A. This type of flow, known as Taylor flow, is disadvantageous in transferring a sample plug because the portion of the sample plug closer to the wall travels slower than the portion in the center of the tube. This flow profile extends the plug into liquid on each side of the plug, thereby producing an elongation and dilution of the sample plug, thereby reducing the detectability of the sample. This dilution and elongation is prevented by sandwiching the sample plug between a pair of air bubbles as in Figure 2B. The transfer of plugs sandwiched between gas bubbles is referred to as segmented flow. Because flow of the sample plug past the meniscus between each bubble and the sample plug is prevented, a flow pattern within each sample plug is produced like that shown in Figure 2B. Such flow is called Bolus flow and is useful in liquid-liquid extractions as shown in Figure 2C. In that figure, a first liquid 21 and a second liquid 22, which are immiscible in one another, are inserted next to one another in the solvent stream and are sandwiched between a pair of air bubbles. The resulting Bolus flow in each of these liquid plugs continually renews the portion of each liquid at or near the interface between these two liquids. In order to extract the solute in liquid 21, liquid 22 is selected not only to be immiscible with liquid 21, but also to have a higher coefficient of solubility for the solute than does liquid 21. When the volume of liquid 22 is less than that of liquid 21, this can increase the resulting concentration of the solute in liquid 22 over the original concentration in liquid 21, thereby increasing the signal amplitude when liquid 22 is passed through the detector. In the case in which solvents 21 and 22 are miscible we get a flow pattern as shown in Figure 2B, resulting in a total mixing of the two liquids. This phenomenon can be used to mix a sample with an inert liquid in order to dilute it or to mix it with reagents for chemical modification of the sample for better detectability and/or separability.

Unfortunately, as the article by J.C. Kraak indicates, in the case of liquid-liquid extraction, the volumetric ratio of liquid 21 to liquid 22 is limited to approximately four so that the ratio of the resulting concentration of sample solute in liquid 22 to the original concentration in liquid 21 must be less than four. Also, the phase separator required to remove liquid 21 and the air bubbles before passage of the stream through the detector, broadens the sample plugs and can transfer liquid from one plug to another. For large sample plugs, this is not critical because the concentration profile of the plug after passage through the phase separator still has a plateau within which a representative sample aliquot can be withdrawn. However, for the small samples that are increasingly utilized in chemical analyses, the broadening by the phase separator significantly affects the detection quality. The continuous flow liquid-liquid process is also rather inflexible because one setup is only suitable for one type of analysis. In addition, the insertion of carrier solvent, sample and air through separate inlets requires accurate timing to be able to insert sample plugs and air bubbles at the selected locations in the solvent stream.

Continuous-flow processing methods are also known from Analytical Chemistry, Vol. 53, No.12, (October 1981, pages 1403A—1418A. This magazine article furthermore shows discrete liquid processing systems wherein sample liquid reactants and diluents are successively introduced into a separate reaction vessel with the help of a movable probe and a reversible pump or several syringes.

From WO—A—84/02000 is known a method and a corresponding apparatus for processing sample liquid to modify a physical or chemical parameter of the liquid wherein the sample liquid can be transferred to an analytical instrument after processing. The known sample processing apparatus comprises a tube system wherein the processing takes place and several pumps (syringes) connected to the tube system. The pumps are used to introduce liquid to be processed, and/or processing liquids into the tube system.

In the known apparatus, droplets of reactants are formed by introducing by means of the pumps a certain volume of reactant liquid into a conduit which contains inert, immiscible carrier liquid. The droplets are then moved inside the tube system by the carrier liquid. The movements of the liquids inside the tube system are produced by connecting the conduits to a plurality of pistons, pumps or to reservoirs containing compressed gas or partial vacuum, whereby control is achieved by a plurality of valves. The tube system comprises at least one zone where at least three conduits meet. The flow of the carrier liquid in the tube system is controlled such that various droplets of chemical reactants are moved to the junction zone of several conduits to allow the formation and coalescence of the droplets.

Relative to this prior art, the invention according to claim 1 solves the problem to provide a method for processing sample liquid prior to injection into an analytical instrument which permits high accuracy in the preparation of small samples at a less complex design of the liquid processing system and which permits easy transferring of the processed liquid into the analytical instrument.

According to the invention, it has been realized that a certain type of injection systems for analytical instruments can be operated in a new way to allow both sample processing and subsequent injection. According to the invention, as a result of having the plug come to rest within the tube in a controlled fashion in preparation for processing, the processing can be done with high accuracy without the need for critical timing in operations taking place "on the fly". The plug may be stopped at an exact location for processing to take place undisturbedly.

An injection system for a liquid chromatograph as such is known from Hewlett-Packard Journal, April 1984, pages 21 to 24. This injection system comprises a syringe for aspirating sample liquid which is then transferred by a stream of pressurized liquid to the separation column of the chromatograph. This known injection system, however, is not used for processing liquid.

The subclaims are directed to the following preferred embodiments of the invention:

In accordance with claim 2 fluid may be ejected from the entrance end of the tube after processing to facilitate hookup of the pump to the other end of the tube.

In accordance with claim 3 gas bubbles may be drawn into the tube to sandwich liquid plugs between them so that bolus flow results in the liquid to enhance internal mixing.

In accordance with claim 4 two or more adjacent plugs may be drawn from different liquids to induce mixing, extraction or chemical reactions therebetween during movement within the tube for processing purposes.

In accordance with claim 5 liquid-liquid extraction may be accomplished by drawing adjacent plugs from properly selected immiscible fluids and moving them along the tube jointly.

In accordance with claim 6 the efficiency of liquid-liquid extraction may be increased substantially by extracting solute from two or more plugs of a sample fluid with one plug of solvent.

In accordance with claim 7 miscible fluids may be mixed by moving them along the tube jointly.

In accordance with claims 8 and 9, discontinuous processing steps may take place at certain selected locations within the tube. Claims 10 and 11 are directed to preferred methods of removing processed liquid from the tube for analysis.

In accordance with the illustrated preferred embodiment, a method and associated apparatus are presented for automatic pre-treatment of samples prior to passage of the samples through a detector. The apparatus utilizes a syringe that includes a motor for electrical control of syringe plunger motion. The syringe is connected to a sample preparation tube that includes a needle that has an associated motor that can raise and lower the needle. The syringe functions as a bidirectional pump which can controllably move samples in either direction along the sample preparation tube. An autosampler is included to electro-mechanically insert selected sample vials under the needle.

The autosampler, needle and syringe are all controlled by a microprocessor to automate preparation of samples. The needle and autosampler are controlled to place under the needle a vial containing a sample to be processed. The needle is lowered into the vial, a sample plug is drawn through the needle into the sample preparation tube and then the needle is removed from the sample vial. The syringe is then controlled to move the sample in any manner desired along the sample preparation tube. Motion of the sample as a result of control of the syringe creates far greater flexibility than that present in an apparatus that only utilizes the syringe to draw in a sample which is then switched into a continuous stream of solvent. In this latter apparatus the processing of the sample is dictated by the arrangement for the flow of the solvent In contrast to that apparatus control of, sample plug motion by control of the syringe enables the sample plug to be moved at will. For example, the sample plug can be moved to induce Bolus flow for mixing or extraction. The sample plug can be moved into a section of the sample preparation tube within a heater element and then left there as long as desired. Another section of the sample preparation tube can contain a detector for final detection of the sample or for intermediate detection to monitor the preparation of the sample.

The syringe and needle control can be correlated to draw air into the needle just before and just after drawing in a particular liquid, thereby segmenting the fluid stream to isolate that liquid from the rest of the fluid stream. Such a sample method of producing segments in the fluid stream avoids the need for close timing between bubble insertion through one inlet and sample injection through another inlet as is required in the continuous flow processes discussed earlier. The needle, syringe and autosampler can be coordinated to insert a variety of samples and/or processing fluids into the tube in any order desired, thereby enabling processing of several distinct sample plugs concurrently and/or inserting various other reagents to interact with the sample plug. The same plug of extraction fluid can be used to extract sample solute from a succession of sample plugs to produce an increase in concentration greater than four. The processing of a given sample can terminate by ejection into a sample vial for use later or elsewhere or can terminate by passage through the detector used to measure the sample.

A transfer tube is used to transfer a sample from the sample preparation path into a detector path. This transfer process can also be used to separate air bubbles and waste phase from the sample to be transferred. Since, in this modified apparatus, the high pressure carrier solvent used to force fluid through the separation column is not passed through the needle, the sample preparation path need not be adapted to operate with high internal pressures.

The invention will now be described in greater detail with reference to the accompanying drawings. In the drawings,

Figure 1A is a block diagram of a prior art chromatograph.

Figure 1B illustrates the functional operation of the 6-port valve of Figure 1A.

Figure 2A shows the velocity profile of Taylor flow.

Figure 2B shows the flow pattern in Bolus flow.

Figure 2C illustrates the enhancement of liquid-liquid extraction due to Bolus flow.

Figure 3A is a block diagram of a preferred apparatus wherein the method according to the invention may be performed.

Figure 3B illustrates the functional operation of the 6-port valve of Figure 3A.

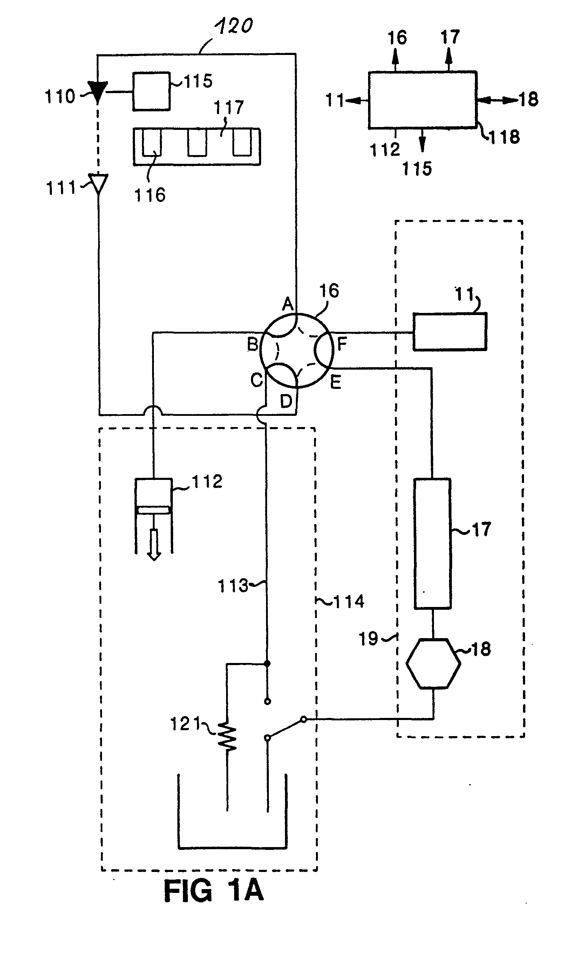

In Figure 1A is illustrated a chromatograph having an automatic sample injection system. In accordance with the preferred embodiment of the present invention, it was observed that this system can be modified structurally and operated in a new way that not only enables samples to be injected into a solvent stream for detection, but also enables automated processing of the samples before injection into the solvent stream.

The system in Figure 1A includes a solvent source 11 that provides a stream of solvent into which sample plugs are inserted. Typically, source 11 includes a set of solvent sources, each of which is connected to an associated one of a set of metering pumps. Source 11 also contains a valve that controllably connects one of the metering pumps through a high pressure booster and a damper to a 6- port rotary valve 16. The high pressure booster increases the pressure and the damper smoothes out pressure variations introduced by the booster.

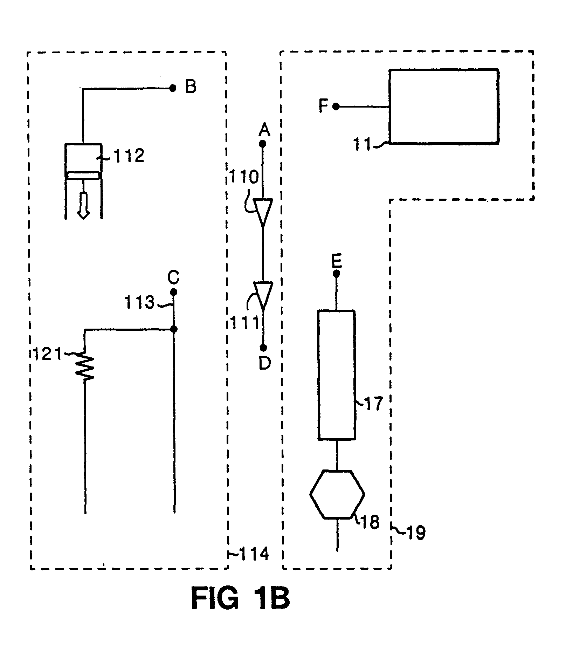

Valve 16 serves to controllably connect the system in a manner more clearly illustrated in Figure 1B. In a first rotary position, port F is connected to port E so that solvent flows from source 11 to the input of a column 17 and then on through a detector 18. The path indicated as path 19 will be referred to herein as the detector path. In a second rotary position, port F is connected to port A and port D is connected to port E so that a path segment AD containing a needle 110 and a needle seat 111 is inserted into detector path 19.

In the second rotary position, port B is connected to port C so that a syringe 112 is connected directly to a tube 113 that is open to the ambient atmosphere. The path segment indicated as path 114 will be referred to herein as the sample preparation path. In the first rotary position, port B is connected to port A and port D is connected to port C so that needle 110 and seat 111 are inserted into the sample preparation path. Thus, in the first rotary position, needle 110 and seat 111 are inserted into the sample preparation path and in the second rotary position needle 110 and seat 111 are inserted into the detector path.

As shown in Figure 1A, needle 110 is connected to a motor 115 which can raise and lower the needle. The needle is raised to enable insertion of a sample vial 116 under the needle. Motor 115 lowers the needle into a sample vial for extraction of a sample from the sample vial. Syringe 112 includes a motor which can be activated to draw sample fluid into needle 110. When the needle is lowered with no vial inserted, then the needle fits securely into seat 111. Selection of a vial and insertion of the vial under needle 110 is controlled by an autosampler 117 such as the HP 79847A autosampler manufactured by Hewlett-Packard Company. Valve 16, motor 115 autosampler 17, syringe 112, detector 18 and the metering pumps are all connected to and controlled by a processor such as microprocessor 118.

This system is a continuous flow system in which solvent is continuously flowing in the detector path 19. In normal operation, valve 16 is set into the first rotational position to rinse the column with solvent and to place the needle into sample path 114. Needle 110, autosampler 117 and syringe 112 are controlled to select a sample vial, place the vial under the needle, withdraw a sample from the vial, and then reinsert the needle in seat 111. Valve 16 then switches path segment AD into the detector path so that the flowing solvent passes through the needle and carries the sample into column 17. The section of the fluid stream containing the injected sample is referred to as the sample plug. Valve 16 then returns to the first rotary position so that needle 110 is reinserted into the sample path for withdrawal of a subsequent sample from a sample vial.

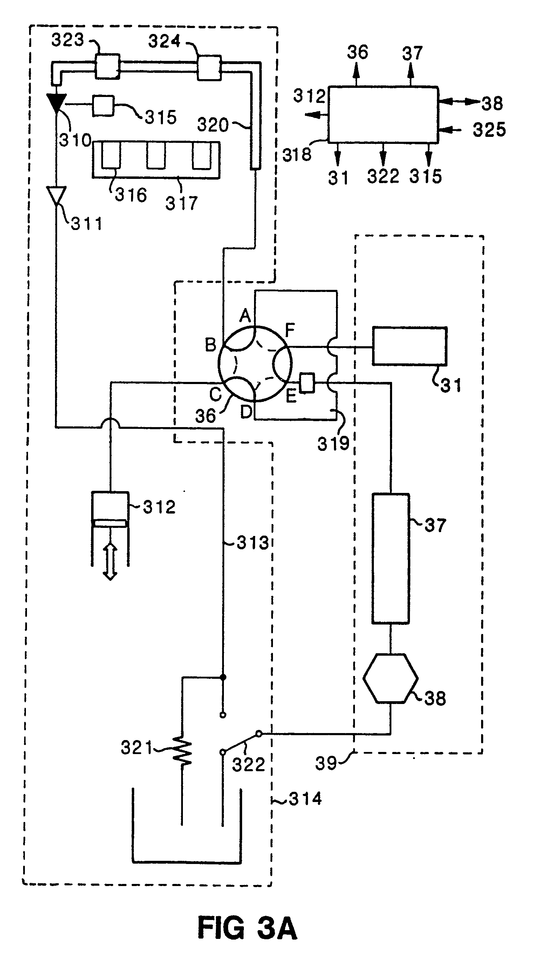

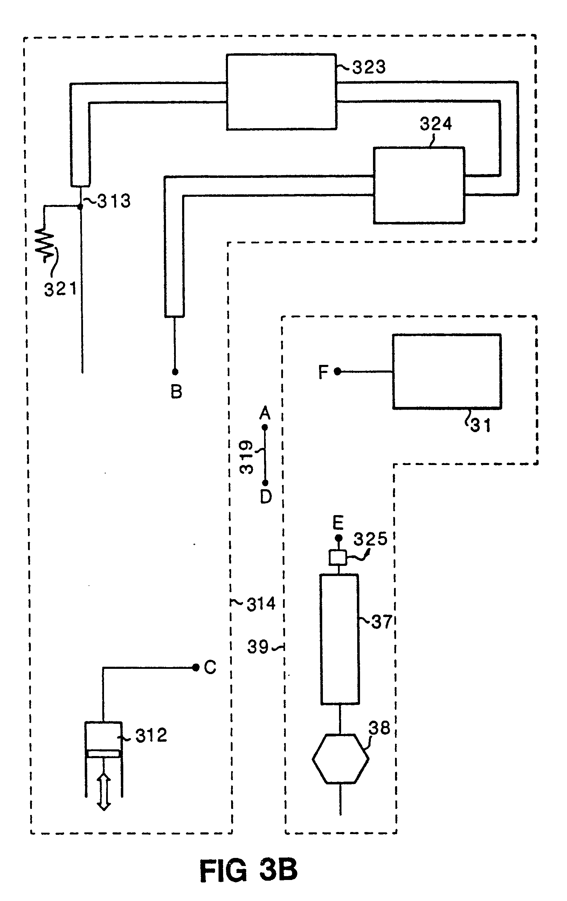

In Figure 3A is shown a modification of the apparatus of Figure 1A that is more suitable than that shown in Figure 1A for processing the samples before injecting them in the solvent stream in detector path 19. Those elements in Figures 3A and 3B that are equivalent to elements in Figure 1A are denoted with corresponding reference numerals. In particular, an element having a corresponding element designated by numeral 1x or 1xy in Figure 1A is denoted as 3x or 3xy respectively, to show this correlation. In Figure 3A the elements are connected to valve 36 in configuration that is more convenient than the configuration in Figure 1A. The effect of the reconfiguration is most easily seen by comparison of Figure 3B with Figure 1B. In the new, configuration, operation of valve 36 functions to insert a transfer tube 319 either into a detector path 39 or into a sample preparation path 314. One advantage of this is that needle 310 and seat 311 are not transferred into the high pressure detector path and therefore need not be designed to seal at high pressures. More significantly, the transfer tube can be selected to have a smaller volume than the needle, seat and associated tubing, which is advantageous in transferring small sample plugs from the sample preparation path to the detector path. The utility of the sample preparation tube will be discussed in greater detail below.

Sample preparation occurs in a sample preparation path 314 containing a sample preparation tube 320 and a seat 311. Sample preparation tube 320 includes a needle 310 that fits into seat 311. Seat 311 also includes a tube 313 that is open to the atmosphere through a flow restriction 321. A switch 322 is included to enable diversion of solvent into tube 313 to produce a reverse-directed flow of solvent through needle 310, sample preparation tube 320 and syringe 312 to allow flushing of those three elements. The flow path that includes sample preparation tube 320, seat 311 and syringe 312 is referred to herein as the sample preparation path and is referenced by numeral 314.

A motor 315 is connected to needle 310 to raise and lower the needle to enable containers, such as vial 316, to be inserted under, the needle. When no vial is present under the needle, the needle can be lowered into seat 311 to form a continuous path from sample preparation tube 320 to tube 313. An autosampler 317 controllably selects, inserts and retrieves vials under needle 310. Elements 32, 36, 317, 38, 315 and 322 are controlled by a processor 318 to enable automation of the sample preparation and sample detection processes.

Under the control of processor 318, a sample plug is generated, pre-processed and then detected in the following manner. Valve 36 is placed in the first rotary position and solvents are controllably supplied through column 37 to rinse the column. Sample preparation path 314 is disjoint from detector path 39 so that sample preparation can be taking place concurrently with rinsing of the column or detection of a sample. To prepare a sample, needle 310 is raised, a vial 316 is inserted under the needle and the needle is lowered into the sample. Syringe 312 is controlled to draw a selected amount of sample through needle 310 to form a sample plug.

If it is desired to segment the sample plug, then the needle and syringe are controlled to draw in through the needle a small bubble of air just before the needle is lowered into the sample and just after the needle is lifted out of the sample. This method of segmenting a sample is much simpler than prior methods which insert sample and air through separate inlets. In prior systems a phase separator is needed to remove the air bubbles. Unfortunately, a phase separator typically introduces undesired band broadening and also introduces contamination by transfer of liquid from one sample plug to another. Especially for larger reaction and extraction times, this method requires large amounts of sample. In addition, because each application requires a particular setup of the hardware for that application, flexibility is low. Development of a method is time consuming because interfacing with other instruments can only be done by a real time program.

In contrast to these prior sample preparation methods, the present approach to segmentation avoids all this. One or only a limited number of sample plugs are manipulated by a reversible pump in a small volume. As discussed below, the same structure that allows phase separation in the new system, also functions as the interface to the measuring system, thereby reducing even more the volume of sample required. The reversibility, controllability and low volume of the phase separator-interface also enable improved control over process parameters and greater flexibility of sample preparation. Because a single sample plug can be manipulated at a given time for processing, there is no need for real-time programming.

As an example of the increased flexibility, an air bubble can be inserted at a selected point in a plug or between adjacent plugs by moving the plugs in the sample preparation path to bring the selected point to the tip of needle 319. The needle is then withdrawn from seat 311, an air bubble is drawn in, and then the needle is reinserted into seat 311 for further processing and/or detection.

The transfer tube enables efficient transfer of a sample into detector path 39 and also enables simple separation of air bubbles and undesired solvents without introducing the broadening and segment-to-segment transfers associated with existing separators. The volume of transfer tube 319 is selected to be substantially equal to the volume of the sample plug to be transferred to detector path 39. With this choice of volume, when the syringe is controlled to place a segmented sample into transfer tube 319, the segmentation bubbles on each side of the sample plugs are outside of the transfer tube and therefore are not transferred to detector path 39. In those cases where it is desired to ensure transfer of all of the sample plug, the volume of the transfer tube is slightly greater than the volume of the sample plug. In those cases where it is important to transfer only liquid from the sample plug, the volume of the transfer tube is slightly smaller than the volume of the sample plug. In a similar manner, in an extraction process, the extraction liquid and sample solute can be transferred to the detector path without transferring the solvent in which the solute was initially dissolved. Transfer tube 319 is easily replaced with tubes of other volumes for transfer of sample plugs of various lengths.

Because the stroke of syringe 312 required to move a sample from needle 310 into tube 319 will vary with variations in the volume of components of the sample preparation path, it may be necessary to calibrate the system. Such calibration is easily achieved, by utilizing, for example, a clear transfer tube that enables visual determination of the stroke required to move the front edge of a sample plug to point B and the stroke required to move the front edge of the sample plug to point C. That stroke is then retained in processor memory to control subsequent transfers into tube 319. Alternatively, to avoid needing to recalibrate each time a transfer tube 319 is replaced by another transfer tube, a sensor, such as bubble sensor 325 in Figure 3B, can be included at point C and/or point B.

For more complicated processing, processing tube 320 can include various modules such as modules 323 and 324. Module 323 is a parameter controller (e.g., an oven) which is used to regulate some parameter of the sample plug. Module 324 is a detector (e.g., a pH meter). Such detectors in sample preparation path 314 can be used not only to monitor and control processing of the sample, but, when appropriate, can be used for final detection of the processed sample. In this latter case, detector path 39 can be eliminated from the apparatus. Unlike in the prior continuous flow processes, the present process allows a sample to be moved in sample preparation tube 320 to an oven and left at that point for any time period desired. It should be noted that syringe 312 functions as a reversible pump which moves fluid in sample preparation tube 320 in either direction, thereby also inducing associated fluid flow across the tip of the needle. The syringe is a particularly attractive pump because of its simplicity, its ease of activation and control, and its ability to move a sample plug accurately within a continuous range of distances. Similarly, fluids can be supplied to the tip of needle 310 by means other than autosampler 317. For example, tube 313 can be connected at a tee to a tube in which fluid flows past the tee. In such a system, the fluid may be, but need not be, segmented. The syringe is then controlled to withdraw selected portions of this fluid stream to form liquid plugs in tube 320. The system could also be connected to a robotic system, which delivers the sample in a fluid form. Interfacing with other systems is also possible by use in the other system of a transfer tube that can be controllably inserted into sample preparation path 314.

**Claims**

1. Use of a sample injection system of an analytical instrument, for example of a liquid chromatograph, for processing sample liquid to modify a physical or chemical parameter of the liquid prior to injection into the analytical instrument, wherein

a) the sample injection system comprises a tube system (120; 319, 320) and a reversible pump (112; 312) connectable to the tube system such that liquid is sucked into the tube system when the pump is operated in a first direction, with at least a portion (120; 319) of the tube system being connectable via a first port to a solvent source (11; 31) and via a second port to a detector path (17, 18; 37, 38) of the analytical instrument such that liquid is transported from said portion (120; 319) of the tube system to the detector path by the stream of solvent delivered by the solvent source,

b) the processing of the sample liquid is performed within the tube system when the solvent source (11; 31) is disconnected from the tube system and the reversible pump (112; 312) is connected to the tube system such that control of the movement of liquids within the tube system is achieved by correspondingly operating said pump (112; 312),

c) said pump (112; 312) is used for sucking in and for moving plugs of liquid to be processed, and/or processing liquids, and/or air bubbles in the tube system, and

d) said pump (112; 312) is stopped at least once during the processing in a controlled way to stop the movement of the plug of liquid within the tube system in preparation for a following processing step to be applied to the liquid in the plug.

2. Use of a sample injection system as in claim 1 wherein

e) the pump (112; 312) is operated to eject fluid from the tube (120; 320) through the first end (110; 310) of the tube after processing.

3. Use of a sample injection system as in claim 1 or 2, wherein

f) the pump (112; 312) is operated to draw in gas through the first end (110; 310) of the tube (120; 320) before it is first operated to draw in liquid, and

g) the pump is operated to draw in gas through the first end of the tube after it is last operated to draw in liquid, to create bolus flow within the liquid in the tube while it is moving therein.

4. Use of a sample injection system as in any preceding claim, wherein the processing step following the step of stopping the pump (112; 312) at least once in a controlled way to stop the movement of the plug of liquid within the tube (120; 320) comprises

h) at least one repetition of the step of drawing in a plug of liquid through the first end (110; 310) of the tube (120; 320) using a second liquid such that a plug of the second liquid, hereinafter called the second plug, is drawn in through the first end (110; 310) of the tube (120; 320) to contact the liquid, hereinafter called the first liquid, in the plug first drawn in, hereinafter called the first plug, and further comprising the step of

i) operating the pump (112; 312) to move the first plug and the second plug jointly within the tube.

5. Use of a sample injection system as in claim 4 wherein the first liquid contains a solute of interest and the following steps are performed before step h):

j) selecting the second liquid to be a solvent for the solute of interest, and further

k) selecting the second liquid to be immiscible with the liquid containing the solute of interest, so that a transfer of the solute of interest to the solvent liquid results during the joint movement of the first plug and the second plug within the tube (120; 320).

6. Use of a sample injection system as in claim 5, wherein the first plug is drawn in from the solvent liquid, and wherein the following steps are performed at least once after step i).

l) operating the pump (112; 312) to eject the second plug from the tube (120; 320) through the first end (110; 310),

m) operating the pump to draw in through the first end a new second plug from a fresh supply of the liquid containing the solute of interest to contact the first plug, and

n) repeating step i) at least once to transfer solute of interest from at least two plugs of the liquid containing it to the plug of the solvent liquid.

7. Use of a sample injection system as in claim 4, wherein the following step is performed before step h):

o) selecting the second liquid to be miscible with the sample liquid, so that a mixing of the first liquid with the second liquid results during the joint movement of the first plug and the second plug within the tube (120; 320).

8. Use of a sample injection system as in any preceding claim, wherein the pump (312) is operated to move a plug of interest into a portion (323) of the tube (320) wherein an external influence can be exerted on the plug of interest, and wherein the processing step following the step of stopping the pump (312) at least once in a controlled way to stop the movement of the plug of liquid within the tube (320) comprises exerting the influence.

9. Use of a sample injection system as in any preceding claim, wherein the pump (312) is operated to move a plug of interest into a portion (324) of the tube (320) wherein a physical or chemical parameter of the plug of interest can be measured and wherein the, processing step following the step of stopping the pump (312) at least once in a controlled way to stop the movement of the plug of liquid within the tube (320) comprises measuring the parameter.

10. Use of a sample injection system as in any preceding claim, wherein:

p) after processing, the pump (312) is operated to move a plug of interest to a transfer section (319) connected into the tube by a valve (36), and

q) the valve is operated to connect the transfer section into a second tube (39) to transfer the selected plug of liquid into the second tube.

11. Use of a sample injection system as in claim 10, wherein step p) further comprises the step of:

r) sensing the passage of a boundary of the plug of interest past an end (325) of the transfer section (319) to facilitate positioning the plug of interest accurately in the transfer section.

**Patentansprüche**

1. Verwendung eines Probeninjektionssystems eines analytischen Instrumentes, zum Beispiel eines Flüssigkeitschromatographen, zur Behandlung von Probenflüssigkeit, um einen physikalischen oder chemischen Parameter der Flüssigkeit vor der Injektion in das analytische Instrument zu ändern, wobei:

a) das Probeninjektionssystem ein Röhrensystem (120; 319, 320) umfaßt sowie eine reversible Pumpe (112; 312), welche mit dem Röhrensystem derart verbindbar ist, daß Flüssigkeit in das Röhrensystem eingesaugt wird, wenn die Pumpe in einer ersten Richtung betrieben wird, wobei wenigstens ein Teil (120; 319) des Röhrensystems über einen ersten Anschluß mit einer Lösungsmittelquelle (11; 31) verbindbar ist und über einen zweiten Anschluß mit einem Detektorzweig (17, 18; 37, 38) des analytischen Instrumentes, so daß Flüssigkeit von diesem Teil (120; 319) des Röhrensystemes zu dem Detektorzweig transportiert wird durch den Lösungsmittelstrom, der von der Lösungsmittelquelle gefördert wird,

b) die Behandlung der Probenflüssigkeit innerhalb des Röhrensystems durchgeführt wird, wenn die Lösungsmittelquelle (11; 31) von dem Röhrensystem abgetrennt ist und wenn die reversible Pumpe (112;312) mit dem Röhrensystem verbunden ist, so daß die Steuerung der Bewegung von Flüssigkeiten innerhalb des Röhrensystems durch entsprechendes Betreiben der pumpe (112; 312) erreicht wird,

c) die Pumpe (112; 312) verwendet wird zum Einsaugen und zum Bewegen von zu behandelnden Flüssigkeitspfropfen und/oder zur Behandlung dienender Flüssigkeiten und/oder Luftblasen in dem Röhrensystem, und

d) die Pumpe (112; 312) wenigstens einmal während der Behandlung auf kontrollierte Weise angehalten wird, um die Bewegung des Flüssigkeitspfropfens innerhalb des Röhrensystems anzuhalten in Vorbereitung für einen nachfolgenden Behandlungsschritt, welcher auf die Flüssigkeit in dem Pfropfen angewandt wird.

2. Verwendung eines Probeninjektionssystems gemäß Anspruch 1, wobei

e) die Pumpe (112; 312) in der Weise betrieben wird, daß nach der Behandlung Flüssigkeit aus der Röhre (120; 320) durch das erste Ende (110; 310) der Röhre ausgestoßen wird.

3. Verwendung eines Probeninjektionssystems gemäß Anspruch 1 oder 2, wobei

f) die Pumpe (112; 312) in der Weise betrieben wird, daß durch das erste Ende (110; 310) der Röhre (120; 320) Gas eingesaugt wird, bevor sie zuerst zum Einsaugen von Flüssigkeit betrieben wird, und

g) die Pumpe in der Weise betrieben wird, daß Gas durch das erste Ende der Röhre eingesaugt wird, nachdem sie zuletzt betrieben wurde, um Flüssigkeit einzusaugen, um damit bei der Bewegung der Flüssigkeit in der Röhre Bolusfluß innerhalb der Flüssigkeit zu erzeugen.

4. Verwendung eines Probeninjektionssystems gemäß einem der vorhergehenden Ansprüche, wobei der Behandlungsschritt, welcher auf den Schritt des kontrollierten Anhaltens der Pumpe (112; 312) zum Anhalten der Bewegung des Flüssigkeitspfropfens innerhalb der Röhre (120; 320) folgt, umfaßt

h) wenigstens eine Wiederholung des Schrittes des Einsaugens eines Flüssigkeitspfropfens durch das erste Ende (110; 310) der Röhre (120; 320), wobei eine zweite Flüssigkeit verwendet wird, so daß ein Pfropfen der zweiten Flüssigkeit, nachfolgend zweiter Pfropfen genannt durch das erste Ende (110; 310) der Röhre (120; 320) eingesaugt wird, um die Flüssigkeit in dem zuerst eingesaugten Pfropfen zu berühren, welche nachfolgend die erste Flüssigkeit genannt wird, und

i) Betreiben der Pumpe (112; 312) in der Weise, daß der erste und der zweite Pfropfen gemeinsam innerhalb der Röhre bewegt werden.

5. Verwendung eines Probensinjektionssystems gemäß Anspruch 4 wobei die erste Flüssigkeit einen aufgelösten interessierenden Stoff enthält, und die folgenden Schritte vor dem Schritt h) ausgefürt werden:

j) Auswählen der zweiten Flüssigkeit als Lösungsmittel für den interessierenden aufgelösten Stoff und weiterhin

k) Auswählen der zweiten Flüssigkeit derart, daß sie nicht mischbar ist mit der Flüssigkeit, welche den interessierenden aufgelösten Stoff enthält, so daß eine Übertragung des interessierenden aufgelösten Stoffes in die Lösungsmittelflüssigkeit während der gemeinsamen Bewegung des ersten und des zweiten Pfropfens innerhalb der Röhre (120; 320) erfolgt.

6. Verwendung eines Probeninjektionssystems gemäß Anspruch 5, wobei der erste Pfropfen aus der Lösungsmittelflüssigkeit eingesaugt wird und die nachfolgenden Schritte wenigstens einmal nach dem Schritt i) ausgeführt werden:

l) Betreiben der Pumpe (112; 312) derart, daß der zweite Pfropfen aus der Röhre (120; 320), durch das erste Ende (110; 310) ausgestoßen wird,

m) Betreiben der Pumpe derart, daß durch das erste Ende ein neuer zweiter Pfropfen aus einem frischen Vorrat von Flüssigkeit angesaugt wird, welche den interessierenden aufgelösten Stoff enthält, um den ersten Propfen zu berühren, und

n) wenigstens einmaliges Wiederholen des Schrittes i), um den interessierenden aufgelösten Stoff von wenigstens zwei Pfropfen, die ihn enthalten, zu dem Propfen von Lösungsmittelflüssigkeit zu übertragen.

7. Verwendung eines Probeninjektionssystems gemäß Anspruch 4, wobei der folgende Schritt h) ausgeführt wird:

o) Auswählen der zweiten Flüssigkeit derart, daß sie mit der Probenflüssigkeit mischbar ist, so daß eine Mischung der ersten Flüssigkeit mit der zweiten Flüssigkeit während der gemeinsamen Bewegung des ersten Propfens und des zweiten Propfens innerhalb der Röhre (120; 320) sich ergibt.

8. Verwendung eines Probeninjektionssystems gemäß einem der vorhergehenden Ansprüche, wobei die Pumpe (312) derart betrieben wird, daß ein interessierender Pfropfen in einen Bereich (323) der Röhre (320) bewegt wird, in welchem ein äußerer Einfluß auf den interessierenden Pfropfen ausgeübt werden kann, und wo der Behandlungsschritt, welcher dem Schritt des kontrollierten Anhaltens der Pumpe (312) zum Anhalten der Bewegung des Flüssigkeitspfropfens in der Röhre (320) folgt, die Ausübung dieses Einflusses umfaßt.

9. Verwendung eines Probeninjektionssystems gemäß einem der vorhergehenden Ansprüche, wobei die Pumpe (312) derart betrieben wird, daß ein interessierender Pfropfen in einen Bereich (324) der Röhre (320) bewegt wird, wo ein physikalischer oder chemischer Parameter des interessierenden Pfropfens gemessen werden kann, und wobei der Behandlungsschritt, welcher dem Schritt des kontrollierten Anhaltens der Pumpe (312) zum Anhalten der Bewegung des Flüssigkeitspfropfens in der Röhre (320) folgt, das Messen dieses Parameters umfaßt.

10. Verwendung Probeninjektionssystems gemäß einem der vorhergehenden Ansprüche, wobei

p) nach der Behandlung die Pumpe (312) derart betrieben wird, daß ein interessierender Pfropfen in eine Überführrungssektion (319) bewegt wird, welche über ein Ventil (36) mit der Röhre verbunden ist, und

q) das Ventil derart betrieben wird, daß die Überführungssektion mit einer zweiten Röhre (39) verbunden wird, um den ausgewählten Flüssigkeitspfropfen in die zweite Röhre zu überführen.

11. Verwendung eines Probeninjektionssystems gemäß Anspruch 10, wobei der Schritt p) zusätzlich den folgenden Schritt umfaßt

r) Erfassen des Vorbeiganges eines Randes des interessierenden Pfropfens an einem Ende (325) der Überführrungssektion (319), um das genaue Positionieren des interessierenden Pfropfens in der Überführrungssektion zu erleichtern.

**Revendications**

1. L'utilisation d'un système d'injection d'échantillons d'un instrument d'analyse, par exemple d'un chromatographe liquide, pour traiter un liquide échantillon de manière à modifier un paramètre physique ou chimique du liquide avant injection dans l'instrument d'analyse, utilisation dans laquelle:

a) le système d'injection d'échantillon comporte un système à tube (120; 319, 320) et une pompe réversible (112; 312) pouvant être reliée au système à tube de manière à produire une succion du liquide dans le système à tube lorsqu'on fait fonctionner la pompe dans un premier sens, avec au moins une partie (120; 319) du système à tube pouvant être reliée, via un premier orifice, à une source de solvant (11; 31) et, via un second orifice, à un trajet de détecteur (17, 18; 37, 38) de l'instrument d'analyse, de manière à transporter le liquide de cette partie (120; 319) du système à tube vers le trajet de détecteur par le courant de solvant délivré par la source de solvant,

b) le traitement du liquide échantillon est effectué à l'intérieur du système à tube lorsque la source de solvant (II; 31) est déconnectée du système à tube et la pompe réversible (112; 312) est reliée au système à tube de manière à pouvoir commander le mouvement des liquides dans le système à tube par un fonctionnement correspondant de cette pompe (112; 312),

c) ladite pompe (112; 312) est utilisée pour aspirer par succion et déplacer des tampons du liquide à traiter et/ou des liquides de traitement et/ou des bulles d'air dans le système à tube, et

d) ladite pompe (112; 312) est arrêtée, de façon controlée, au moins une fois en cours du traitement afin d'interrompre le déplacement du tampon de liquide à l'intérieur du système à tube en prévision d'une étape ultérieure de traitement à appliquer au liquide dans le tampon.

2. L'utilisation d'un système d'injection d'échantillons selon la revendication 1, dans laquelle:

e) on fait fonctionner la pompe (112; 312) de manière à éjecter le fluide hors du tube (120; 320) par la première, extrémité (110; 310) du tube après traitement.

3. L'utilisation d'un système d'injection d'échantillons selon la revendication 1 ou la revendication 2, dans laquelle:

f) on fait fonctionner la pompe (112; 312) de manière à aspirer un gaz par la première extrémité (110; 310) du tube (120; 320) avant de commencer à la faire fonctionner pour l'aspiration du liquide, et

g) on fait fonctionner la pompe de manière à aspirer un gaz par la première extrémité du tube après la dernière fois où on l'a faite fonctionner pour aspirer du liquide, de manière à créer un écoulement de Bolus à l'intérieur du liquide se trouvant dans le tube pendant que ce liquide s'y déplace.

4. L'utilisation d'un système d'injection d'échantillons selon l'une des revendications précédentes, dans laquelle l'étape de traitement, qui suit l'étape consistant à arrêter, de façon contrôlée, au moins une fois la pompe (112; 312) afin d'interrompre le déplacement du tampon de liquide à l'intérieur du tube (120; 320), comprend l'étape consistant à:

h) répéter au moins une fois l'étape consistant à aspirer un tampon de liquide par la première extrémité (110; 310) du tube (120; 320) en utilisant un second liquide de manière à aspirer un tampon du second liquide, ciaprès désigné "second tampon", par la première extrémité (110; 310) du tube (120; 320) de manière à ce qu'il vienne en contact avec le liquide, ci-après désigné "premier, liquide", du tampon aspiré en premier, ci-après désigne ' "premier tampon", et comprend également l'etape consistant a:

i) actionner la pompe (112; 312) de manière à déplacer concurremment le premier tampon et le second tampon à l'intérieur du tube.

5. L'utilisation d'un système d'injection d'échantillons selon la revendication 4, dans lequel le premier liquide contient un soluté à étudier et dans lequel, avant l'étape h), on exécute les étapes suivantes:

j) choix comme second liquide d'un liquide qui soit un solvant pour le soluté à étudier et, en eoutre,

k) choix comme second liquide d'un liquide qui ne soit pas miscible avec le liquide contenant le soluté à étudier, de manière qu'il en résulte un transfert du soluté à étudier vers le liquide solvant lors du mouvement concurrent du premier tampon et du second tampon à l'intérieur du tube (120; 320).

6. L'utilisation d'un système d'injection d'échantillons selon la revendication 5, dans lequel on aspire le premier tampon depuis le liquide solvant et dans lequel on exécute au moins une fois, après l'étape i), les étapes suivantes:

l) actionnement de la pompe (112; 312) de manière à éjecter le second tampon hors du tube (120; 320) par la première extrémité (110; 310),

m) actionnement de la pompe de manière à aspirer par la première extrémité un nouveau second tampon depuis une alimentation neuve en liquide contenant le soluté à étudier afin de venir en contact avec le premier tampon, et

n) répétition de l'étape i) au moins une fois, pour transférer le soluté à étudier depuis au moins deux tampons du liquide le contenant vers le tampon du liquide solvant.

7. L'utilisation d'un système d'injection d'échantillons selon la revendication 4, dans lequel on exécute, avant l'étape h), l'étape suivante:

o) choix comme second liquide d'un liquide qui soit miscible avec le liquide échantillon, de manière à obtenir le mélange du premier liquide avec le second liquide lors du mouvement concurrent du premier tampon et du second tampon à l'intérieur du tube (120; 320).

8. L'utilisation d'un système d'injection d'échantillons selon l'une des revendications précédentes dans laquelle on actionne la pompe (312) de maniere à deplacer un tampon à étudier vers une partie (323) du tube (320) où peut être exercé sur le tampon à étudier une influence extérieure, et dans laquelle l'étape de traitement suivant l'étape consistant à arrêter la pompe (312) au moins une fois de façon contrôlée pour interrompre le déplacement du tampon de liquide à l'intérieur du tube (320) comprend l'étape consistant à exercer ladite influence.

9. L'utilisation d'un système d'injection d'échantillons selon l'une des revendications précédentes, dans laquelle on actionne la pompe (312) de maniere à déplacer un tampon à étudier vers une partie (323) du tube (320) où peut être mesuré un paramètre physique ou chimique du tampon à étudier, et dans laquelle l'étape de traitement suivant l'étape consistant à arrêter la pompe (312) au moins une fois de façon contrôlée pour interrompre le déplacement du tampon de liquide à l'intérieur du tube (320) comprend l'étape consistant à mesurer ledit paramètre.

10. L'utilisation d'un système d'injection d'échantillons selon l'une des revendications précédentes, dans laquelle:

p) après traitement, on actionne la pompe (312) de manière à déplacer un tampon à étudier vers une partie de transfert (319) reliée au tube par une valve (36), et

q) on actionne la valve de manière à relier la partie de transfert à un second tube (39), afin de transférer le tampon de liquide sélectionné vers le second tube.

11. L'utilisation d'un système d'injection d'échantillon selon la revendication 10, dans lequel l'étape (p) comporte également l'étape consistant à:

r) détecter le passage d'une frontière du tampon à étudier devant une extrémité (325) de la partie de transfert (319), afin de faciliter le positionnement du tampon à étudier dans la partie de transfert.

**EP 0 183 950 B1**

FIG 1A

**FIG 1B**

FIG 2A

FIG 2B

21                    22

FIG 2C

FIG 3A

**FIG 3B**